# EUROPÄISCHE PATENTSCHRIFT

(11) **EP 1 977 847 B1**
(45) Veröffentlichungstag und Bekanntmachung des Hinweises auf die Patenterteilung: **02.06.2010**
(21) Anmeldenummer: 07016841.4
(22) Anmeldetag: 28.08.2007
(51) Int. Cl.: B23K 9/09, B23K 9/173

(54) **Verfahren zum Tandemschweißen**
Method for tandem welding
Procédé destiné au soudage par électrode en tandem

(30) Priorität: 03.04.2007 DE 102007016103
(43) Veröffentlichungstag der Anmeldung: 08.10.2008
(73) Patentinhaber: Linde AG, 80331 München (DE)
(72) Erfinder: Wilhelm, Gerald, 86551 Aichach (DE)

(56) Entgegenhaltungen:
- EP-A- 1 707 296
- US-A1- 2006 037 952

## Beschreibung

Die Erfindung betrifft ein Verfahren zum Tandemschweißen eines Werkstücks mit mindestens zwei abschmelzenden Elektroden A und B, an welche unterschiedliche Potentiale angelegt werden, wobei zwischen Elektrode A und Werkstück ein Impulslichtbogen A und zwischen Elektrode B und Werkstück ein Impulslichtbogen B brennt und wobei der Impulslichtbogen A mindestens eine Grund- und eine Impulsstromphase A mit der Frequenz A und der Impulslichtbogen B mindestens eine Grund- und eine Impulsstromphase B mit der Frequenz B aufweist.

Zum Lichtbogenschweißen unter Schutzgas werden verschiedene Schweißverfahren eingesetzt. Neben dem Verfahren mit abschmelzender Elektrode, zu welcher das Metall-Aktiv-Gas- und das Metall-Inert-Gas-Schweißen zählen, gibt es das mit nicht abschmelzender Elektrode arbeitende Wolfram-Inert-Gas-Schweißen und das Plasmaschweißen. Zu Steigerung der Produktivität werden in den letzten Jahren zunehmend Hochleistungsschweißverfahren eingesetzt. Hochleistungsschweißverfahren, welche in der Regel mit abschmelzenden Elektroden arbeiten, zeichnen sich im Vergleich zum konventionellen Metall-Schutzgas-Schweißen durch höhere Abschmelzleistungen der Elektrode aus. Als Elektroden werden dazu entweder Drähte mit sehr großen Drahtdurchmessem verwendet oder die Drahtvorschubgeschwindigkeit ist höher als beim konventionellen Metall-Schutzgas-Schweißen. Die höheren Abschmelzleistungen lassen sich in höhere Schweißgeschwindigkeiten oder in höhere Schweißnahtvolumina umsetzen - im Vergleich zum konventionellen Schweißen. Grundlagen des Metall-Schutzgas-Hochleistungsschweißens sind im Merkblatt des deutschen Verbandes für Schweißen und verwandte Verfahren e.V., DSV 0909-1 (September 2000) und DSV 0909-2 (Juni 2003) näher beschrieben.

Neben den auch beim konventionellen Schweißen üblichen Schweißverfahren mit einer abschmelzenden Elektrode gibt es beim Hochleistungsschweißen auch Verfahren, bei welchen zwei oder mehrere Elektroden abgeschmolzen werden, die so genannten Mehrdrahtprozesse. Verwendet werden in der Regel zwei abschmelzende Elektroden, jedoch sind auch drei oder mehr Elektroden möglich. Die Elektroden schmelzen in getrennten Lichtbögen unter einer gemeinsamen Schutzgasabdeckung ab und bilden zusammen mit dem geschmolzenen Werkstück-Material ein gemeinsames Schmelzbad. Die Elektroden sind dabei, in Schweißrichtung gesehen, hintereinander oder nebeneinander oder schräg zueinander angeordnet. Eine Anordnung hintereinander wird normalerweise beim Verbindungsschweißen gewählt, eine Anordnung schräg zur Schweißrichtung (also ein Verdrehen zur Schweißrichtung) ist für die Spaltüberbrückbarkeit und bei Überlappstößen von Vorteil und eine Anordnung nebeneinander ist beim Auftragschweißen üblich. Werden zwei Elektroden verwendet und werden diese beiden Elektroden an ein gemeinsames Potential gelegt, spricht man vom Doppeldrahtschweißen. Werden die beiden Elektroden hingegen an unterschiedliche Potentiale gelegt, spricht man von Tandemschweißen. Zur Realisierung des Tandemschweißens werden deshalb zwei Kontaktrohre, zwei Stromquellen und zwei Steuerungen benötigt, wobei die Stromquellen dabei jedoch auch gekoppelt sein und im Master-Slave-Betrieb betrieben werden können. Das Tandemschweißen wird sowohl zum Erstellen von Schweißverbindungen als auch zum Auftragsscheißen eingesetzt.

In der EP 1256410 werden heliumhaltige Schweißschutzgase zum Tandemschweißen empfohlen. Die EP 1707296 beinhaltet ein Verfahren zum Tandemschweißen, bei welchem die in Schweißrichtung vorlaufende Elektrode einen größeren Durchmesser als die nachlaufende Elektrode aufweist. Verfahren mit zwei unterschiedlichen Elektroden, die einen sehr großen Abstand zueinander aufweisen und welche aufgrund dessen nicht ein Schweißbad bilden sondern zu einer Aufbringung in Lagen führen, sind in der JP 6234075, in der JP 63154266 und in der JP2092464 offenbart.

Das Metall-Schutzgas-Tandem-Schweißen bietet den Vorteil, dass zwei Drahtelektroden an getrennten Potentialen liegen und daher die Schweißparameter der beiden Drahtelektroden verschieden eingestellt werden können. So kann z.B. der erste Lichtbogen mit einer niedrigen Spannung beaufschlagt werden, sodass ein besonders tiefer Einbrand erzeugt wird und der nachlaufende Lichtbogen kann mit einer etwas erhöhten Spannung beaufschlagt werden, damit die Schweißnaht breiter wird und mögliche kerbfrei an den Grundwerkstoff anschließt. Ein solches Tandemschweißen ist aus US 2 006 037 952 bekannt, dass die Merkmale des Oberbegriffs des Anspruchs 1 zeigt.

Des Weiteren ist es aber auch möglich, bei gleichen Drahtdurchmessern mit bedeutend unterschiedlichen Drahtvorschubgeschwindigkeiten zu schweißen oder mit verschiedenen Drahtdurchmessem und unterschiedlichen Drahtvorschubgeschwindigkeiten zu schweißen. Bei den bisherigen Steuerungskonzepten zur Realisierung des alternierenden Modus ist der erste Prozess der Master und der zweite der Slave; d.h. die Pulsfrequenz des ersten Prozesses wird für den zweiten Prozess übernommen und der Prozess um ein definiertes Maß phasenverschoben, sodass sich die beiden Impulsphäsen nicht überschneiden. Diesem Steuerungskonzept sind Grenzen gesetzt, wenn mit bei gleichen oder verschiedenen Drahtdurchmessem mit stark unterschiedlichen Drahtvorschubgeschwindigkeiten geschweißt werden soll. Da über einen großen Bereich die Tropfenfrequenz der Drahtvorschubgeschwindigkeit proportional ist und pro Periodendauer, die aus einer Impulsstrom- und aus einer Grundstromphase besteht, ein Tropfen in das Schmelzbad übergehen soll, bedingt das derzeit zugrundeliegende Master-Slave Konzept, dass bei hohen Differenzen in der Drahtvorschubgeschwindigkeit der zweite Prozess mit einer Impulsfrequenz beaufschlagt wird, die bei weitem nicht seiner "natürlichen" Tropfenfrequenz ("natürliche" Tropfenfrequenz bedeutet ein Tropfen pro Periode) entspricht. Insbesondere im Hochleistungsbereich resultieren daraus Spritzer und Prozessinstabilitäten.

Der Erfindung liegt deshalb die Aufgabe zugrunde, ein verbessertes Verfahren zum Tandemschweißen im alternierenden Modus mit mindestens zwei abschmelzenden Elektroden A und B anzugeben.

Die Aufgabe wird erfindungsgemäß dadurch gelöst, dass die Frequenz B ein ganzzahliges Vielfaches der Frequenz A ist, wobei die Impulsstromphase A und die Impulsstromphase B nicht überlappen.

Die Erfindung ermöglicht somit, dass die Unterschiede in den Drahtvorschubgeschwindigkeiten der beiden Prozesse so gewählt werden können, dass die Tropfenablösung des zweiten Prozesses, also des Prozesses B, ein ganzzahliges Vielfaches der Tropfenfrequenz des ersten, mit A bezeichneten Prozesses ist. Mit Hilfe eines entsprechend modifizierten Steuerungskonzeptes wird folglich die Impulsfrequenz synchron zur jeweiligen Tropfenablösefrequenz eingestellt, sodass sich in jedem Prozess in optimaler Weise ein Tropfen pro Periodendauer ablöst. Mit der Erfindung wird somit gewährleistet, dass auch im zweiten, mit B bezeichnetem Prozess durch einen optimalen zeitlichen Verlauf des Schweißstroms sowie einer auf den Prozess abgestimmten Impulsfrequenz, die unabhängig von der Impulsfrequenz des ersten Prozesses ist, eine optimale "Ein-Tropfen-pro- Periodendauer-Ablösung" realisiert wird, und dadurch Prozessinstabilitäten und Spritzerbildung, insbesondere beim Metall-Schutzgas-Hochleistungsschweißen ausbleiben. Eine "Ein-Tropfen-pro-Periodendauer-Ablösung" bedeutet dabei, dass pro Periodendauer ein Tropfen in das Schmelzbad übergeht, wobei eine Periode zumindest eine Impulsstrom- und eine Grundstromphase beinhaltet. Der durch die Erfindung mögliche Ein-Tropfen-pro-Periodendauer-Modus zeichnet sich durch eine besonders hohe Prozessstabilität und eine besonders niedrige Spritzerbildung aus.

Somit brennt gemäß der Erfindung zwischen Elektrode A und Werkstück ein Impulslichtbogen A mit der Frequenz A und zwischen Elektrode B und Werkstück ein Impulslichtbogen B mit der Frequenz B, wobei die Frequenz B ein ganzzahliges Vielfaches der Frequenz A ist. Der Impulslichtbogen A beziehungsweise B zeichnet sich dabei durch eine periodische Wiederholung des Lichtbogenstroms mit der Frequenz A beziehungsweise B aus, wobei der Lichtbogenstrom jeweils mindestens in eine Grund- und eine Impulsstromphase aufweist. Eine Zuordnung von Elektrode A oder B zu einer bestimmten Elektrode im Tandemprozess existiert dabei nicht zwangsläufig. Die bedeutet, dass sowohl Elektrode A als auch Elektrode B vorlaufen oder nachlaufen können beziehungsweise rechts oder links zur Schweißrichtung angeordnet sein können.

Mit dem erfindungsgemäßen Verfahren ist es möglich, auf die Bedürfnisse der einzelnen Elektroden einzugehen und zugleich die Gesamtwirkung der Elektroden auf den Schweißprozess zu berücksichtigen. Dies ist darauf zurückzuführen, dass die Impulsfrequenz für die Elektroden weitgehend voneinander unabhängig gewählt werden kann - aber eben nur insoweit, dass nicht zu nachteiligen Effekten kommt, die auf die Zusammenwirkung der beiden Elektroden zurückzuführen sind. Die Bedürfnisse der Elektrode werden dabei durch die Schweißaufgabe, insbesondere durch die gewünschte Abschmelzleistung vorgegeben. Jedoch beeinflussen die Lichtbögen der Elektroden auch gemeinsam den Schweißprozess, da sich nur ein Schweißbad ausbildet, in welches die Lichtbögen wirken. Mit dem erfindungsgemäßen Verfahren wird somit ein stabiler und spritzerarmer Tandemschweißprozess auch bei hohen Abschmelzleistungen möglich.

Dabei ist zu vermeiden, dass sich die Impulsstromphase A und die Impulsstromphase B überlappen. Dazu ist es notwenig, dass die Impulsstromphase A genügend kurz und die Grundstromphase A ausreichend lang ist, damit während der Grundstromphase A eine beliebige Anzahl an Impulsstromphasen B stattfinden können. Die Periodendauer des Prozesses B muss also so gewählt werden, dass die nötige Anzahl an Perioden und damit Impulsen während der Grundstromphase A vonstatten gehen können. Die Vermeidung von Überlappungen der Impulsstromphasen bedeutet, dass immer nur ein Lichtbogen mit maximaler Leistung brennt. Damit ist bei entsprechend niedrigem Impulsstrom die gegenseitige Beeinflussung der Lichtbögen deutlich geringer als im Falle von Überlappungen. Folglich wird durch die Vermeidung an Überlappung der Impulsphasen (besonders bevorzugt zusätzlich in Kombination mit niedrigen Stromwerten in der Grundstromphase) die Spritzerbildung weiter reduziert und die Prozessstabilität nochmals erhöht.

In besonders vorteilhafter Ausgestaltung der Erfindung weist die Elektrode A einen anderen Durchmesser als die Elektrode B auf. Mit dem erfindungsgemäßen Verfahren ist es nämlich möglich, auch bei unterschiedlichen Elektrodendurchmesser, welche unterschiedliche-Schweißparameter benötigen, einen stabilen und spritzerarmen Prozess zu erhalten, da mit dem erfindungsgemäßen Verfahren sowohl auf die Bedürfnisse der einzelnen Elektroden eingegangen als auch die Gesamtwirkung der Elektroden auf den Schweißprozess berücksichtigt werden kann. So kann mit dem erfindungsgemäßen Verfahren beispielsweise beim Verbindungsschweißen für die vorlaufende Elektrode eine Elektrode mit größerem Durchmesser gewählt werden und für die nachlaufende Elektrode ein kleiner Durchmesser, wodurch sowohl Einbrand und Füllung von Schweißvolumina als auch Ausbildung der Nahtoberfläche optimal unterstützt werden. Es ist aber auch möglich, zwei gleiche Drahtdurchmesser zu verwenden. Bei gleichen Drahtdurchmessern werden dann die Drahtvorschubgeschwindigkeiten voneinander abweichen, so dass sich, trotz gleicher Drahtdurchmesser, nur mit dem erfindungsgemäßen Verfahren die gewünschte "Ein-Tropfen-pro-Periodendauer-Ablösung" einstellen wird.

Vorteilhafterweise weist die Elektrode A eine andere Drahtvorschubgeschwindigkeit als die Elektrode B auf. Auch eine unterschiedliche Einstellung der Drahtvorschubgeschwindigkeit erfordert unterschiedliche Schweißparameter, so dass auch hier optimale Prozessparameter nur mit Hilfe des erfindungsgemäßen Verfahrens erreicht werden.

Mit besonderen Vorteilen werden Drahtelektroden mit einem Durchmesser zwischen 0,8 und 2,5 mm verwendet.

In vorteilhafter Weiterbildung der Erfindung werden in den Stromabfall von Hochstromphase zur Grundstrompasse eine oder mehrere Stromschultern eingefügt. Mit Stromschultern kann in bestimmten Fällen die Prozessstabilität weiter erhöht und die Tropfenablösung optimal unterstützt werden.

Auch kann es von Vorteil sein, während der Grundstromphase kurze Zwischenimpulse einzufügen. Auch dies kann die Prozessstabilität erhöhen und die Tropfenablösung unterstützen.

Mit Vorteil werden als Schutzgas Gase oder Gasgemische verwendet werden, die zumindest Argon, Helium, Kohlendioxid, Sauerstoff und/oder Stickstoff enthalten. Die Festlegung des geeigneten Gases beziehungsweise der geeigneten Gasmischung erfolgt in Abhängigkeit von der Schweißaufgabe, insbesondere unter Berücksichtigung von Grund- und Zusatzwerkstoff. Es kommen sowohl die Reingase als auch Zwei-, Drei- und Mehr-Komponenten-Gemische zum Einsatz. In vielen Fällen erweisen sich auch dotierte Gasmischungen als besonders vorteilhaft, wobei dotierte Gasmischungen Dotierungen mit aktiven Gasen im vpm-Bereich aufweisen, d.h. die Dotierung erfolgt im Bereich von weniger als einem Prozent, meist weniger als 0,1 Vol.-%. Als Dotiergas werden aktive Gase, wie beispielsweise Sauerstoff, Kohlendioxid, Stickstoffmonoxid, Lachgas (Distickstoffmonoxid) oder Stickstoff verwendet.

Dabei kann es von Vorteil sein, wenn mit Gasschleppe gearbeitet wird. Die Verwendung einer Gasschleppe bedeutet, dass zusätzlich zu dem die Lichtbögen umgebenden, auf das Schweißbad gerichteten Schutzgas ein weiterer Schutzgasstrom verwendet wird. Dieser weitere Schutzgasstrom wird mit vergleichsweise schwachem Volumenstrom gegen das Werkstück gerichtet und bedeckt die frische Schweißnaht. Die frische Schweißnaht zeichnet sich dadurch aus, dass das Schweißbad bereits erstarrt aber noch nicht ausgekühlt ist. Durch die Verwendung einer Gasschleppe wird somit gewährleistet, dass auch bei der Abkühlung die Schweißnaht noch unter Schutzgas steht. Da mit dem erfindungsgemäßen Verfahren zur Füllung der großen Schweißvolumina sehr viel Material von den Elektroden abgeschmolzen und in die Schweißnaht eingebracht wird und deshalb die Abkühlung der Schweißnaht verhältnismäßig lange dauert, ist in vielen Fällen die Verwendung einer Gasschleppe von Vorteil.

Das erfindungsgemäße Verfahren eignet sich insbesondere, wenn Werkstücke aus Stählen oder/und aus Aluminium/Aluminiumlegierungen bearbeitet werden. So eignet es sich insbesondere für alle Stahlsorten inklusive Baustählen, Feinkornbaustählen und nichtrostende Stählen. Weiterhin eignet es sich auch für Nickelbasiswerkstoffe. Ebenso ist eine Anwendung für andere Nichteisenmetalle möglich.

Das erfindungsgemäße Verfahren eignet sich sowohl zum Verbindungsschweißen als auch zum Auftragsschweißen

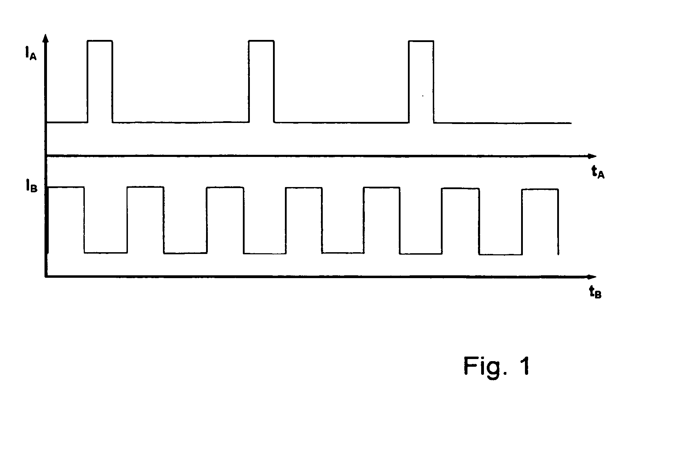

Im Folgenden soll anhand von Figur 1 die Erfindung näher erläutert werden. Figur 1 zeigt dazu eine beispielhafte Ausgestaltung für Impuls- und Grundstromphasen, mit welchen die Elektroden A und B betrieben werden. Aufgetragen ist dazu der Strom gegen die Zeit. Die Stromverläufe wiederholen sich mit der Frequenz A beziehungsweise B. Dabei ist die Frequenz B ist ein ganzzahliges Vielfaches der Frequenz A. Ferner wurden die Stromverläufe hier so gewählt, dass sich die Impulsstromphasen nicht überlappen. So sieht man, dass während der Grundstromphase A sich zwei Impulsstromphasen B ereignen und dass während der Impulsstrom A die Grundstromphase B erfolgt. Die Stromverläufe sind ideal dargestellt und weisen keine Flanken auf. Mit den dargestellten beispielhaften Stromverläufen lässt sich das erfindungsgemäße Verfahren besonders einfach verdeutlichen und erklären. In der Praxis werden die Stromverläufe durch die Schweißaufgabe vorgegeben und weichen folglich von dieser idealistischen Darstellung ab.

## Patentansprüche

1. Verfahren zum Tandemschweißen eines Werkstücks mit mindestens zwei abschmelzenden Elektroden A und B, an welche unterschiedliche Potentiale angelegt werden, wobei zwischen Elektrode A und Werkstück ein impulslichtbogen A und zwischen Elektrode B und Werkstück ein Impulslichtbogen B brennt **dadurch gekennzeichnet, dass** der Impulslichtbogen A mindestens eine Grund- und eine Impulsstromphase A mit der Frequenz A und der Impulslichtbogen B mindestens eine Grund- und eine Impulsstromphase B mit der Frequenz B aufweist, wobei, die Frequenz B ein ganzzahliges Vielfaches der Frequenz A ist, wobei die Impulsstromphase A und die Impulsstromphase B nicht überlappen.

2. Verfahren nach einem der Anspruch 1, **dadurch gekennzeichnet, dass** die Elektrode A einen anderen Durchmesser als die Elektrode B aufweist.

3. Verfahren nach Anspruch 1 oder 2, **dadurch gekennzeichnet, dass** die Elektrode A eine andere Drahtvorschubgeschwindigkeit als die Elektrode B aufweist.

4. Verfahren nach einem der Ansprüche 1 bis 3, **dadurch gekennzeichnet, dass** Drahtelektroden mit einem Durchmesser zwischen 0,8 und 2,5 mm verwendet werden.

5. Verfahren nach einem der Ansprüche 1 bis 4, **dadurch gekennzeichnet, dass** in den Stromabfall von Hochstromphase zur Grundstrompasse eine oder mehrere Stromschultern eingefügt werden.

6. Verfahren nach einem der Ansprüche 1 bis 5, **dadurch gekennzeichnet, dass** während der Grundstromphase kurze Zwischenimpulse eingefügt werden.

7. Verfahren nach einem der Ansprüche 1 bis 6, **dadurch gekennzeichnet, dass** als Schutzgas Gase oder Gasgemische verwendet werden, die zumindest Argon, Helium, Kohlendioxid, Sauerstoff und/oder Stickstoff enthalten.

8. Verfahren nach einem der Ansprüche 1 bis 7, **dadurch gekennzeichnet, dass** Werkstücke aus Stählen oder/und aus Aluminium/Aluminiumlegierungen bearbeitet werden.

## Claims

1. Method for tandem welding a workpiece with at least two consumable electrodes A and B, to which different potentials are applied, a pulsed arc A being produced between electrode A and the workpiece and a pulsed arc B being produced between electrode B and the workpiece, **characterized in that** the pulsed arc A has at least one background current phase and at least one pulsed current phase A with the frequency A and the pulsed arc B has at least one background current phase and at least one pulsed current phase B with the frequency B, wherein the frequency B is an integral multiple of the frequency A, the pulsed current phase A and the pulsed current phase B not overlapping.

2. Method according to Claim 1, **characterized in that** the electrode A has a different diameter than the electrode B.

3. Method according to Claim 1 or 2, **characterized in that** the electrode A has a different wire feed rate than the electrode B.

4. Method according to one of Claims 1 to 3, **characterized in that** wire electrodes with a diameter of between 0.8 and 2.5 mm are used.

5. Method according to one of Claims 1 to 4, **characterized in that** one or more current shoulders are inserted into the current drop from the high current phase to the background current phase.

6. Method according to one of Claims 1 to 5, **characterized in that** short intermediate pulses are inserted during the background current phase.

7. Method according to one of Claims 1 to 6, **characterized in that** gases or gas mixtures which contain at least argon, helium, carbon dioxide, oxygen and/or nitrogen are used as shielding gas.

8. Method according to one of Claims 1 to 7, **characterized in that** workpieces of steels and/or of aluminium/aluminium alloys are worked.

## Revendications

1. Procédé de soudage en tandem d'une pièce à l'aide d'au moins deux électrodes fusibles A et B sur lesquelles des potentiels différents sont appliqués,
dans lequel un arc lumineux A à impulsions brûle entre l'électrode A et la pièce et un arc lumineux B à impulsions brûle entre l'électrode B et la pièce, **caractérisé en ce que**
l'arc lumineux A à impulsions présente au moins une phase de base et une phase A de courant pulsé à fréquence A et l'arc lumineux B à impulsions présente au moins une phase de base et une phase B de courant pulsé à fréquence B, et
**en ce que** la fréquence B est un multiple entier de la fréquence A et
**en ce que** la phase A de courant pulsé et la phase B de courant pulsé ne se superposent pas.

2. Procédé selon la revendication 1, **caractérisé en ce que** l'électrode A présente un autre diamètre que l'électrode B.

3. Procédé selon les revendications 1 ou 2, **caractérisé en ce que** l'électrode A présente une autre vitesse d'avancement de fil que l'électrode B.

4. Procédé selon l'une des revendications 1 à 3, **caractérisé en ce qu'**il utilise des électrodes en fil d'un diamètre compris entre 0,8 et 2,5 mm.

5. Procédé selon l'une des revendications 1 à 4, **caractérisé en ce qu'**un ou plusieurs épaulements de courant sont insérés dans la diminution de courant entre la phase à courant élevé et la phase à courant de base.

6. Procédé selon l'une des revendications 1 à 5, **caractérisé en ce que** de courtes impulsions intermédiaires sont insérées pendant la phase à courant de base.

7. Procédé selon l'une des revendications 1 à 6, **caractérisé en ce qu'**il utilise comme gaz de protection des gaz ou des mélanges de gaz qui contiennent au moins de l'argon, de l'hélium, du dioxyde de carbone; de l'oxygène et/ou de l'azote.

8. Procédé selon l'une des revendications 1 à 7, **caractérisé en ce qu'**il traite des pièces en aciers et/ou en aluminium ou en alliages d'aluminium.
